# EUROPEAN PATENT APPLICATION

(11) **EP 1 048 504 A1**
(43) Date of publication of application: **02.11.2000**
(21) Application number: 00300900.8
(22) Date of filing: 04.02.2000
(51) Int. Cl.: B60J 10/00

(54) **Strip structure**

(30) Priority: 29.04.1999 GB 9909915
(71) Applicant: THE STANDARD PRODUCTS COMPANY, Cleveland Ohio 44102 (US)
(72) Inventor: Harris, David Strachan, Orton Wistow, Peterborough PE2 6YT (GB)
(74) Representative: Nash, David Allan

(57) **Abstract**

There is disclosed a strip structure (1) intended for attachment to a flange (50a), which strip structure comprises a generally U-shaped body optionally reinforced by a rigid or flexible reinforcing member (20), the body having a base region (2) and two opposed side wall regions (3 and 4), which between them define a channel (5) intended for accommodating a flange, one side wall region (4) being provided with at least one first projection (30,31) which projects into the channel (5) and the other side wall region (3) being provided with at least one second projection which is a rolling projection (6),
the rolling projection (6) having a free head region (7) which is connected to the side wall region (3) by an extended stem (8), there being a constricted neck region (9) located between the stem and the head region, the head region and the stem each being enlarged relative to the neck region and the head region having an arcuate surface (10), the arrangement being such that, when a flange is accommodated in the channel with the first and second projections abutting the flange, an attempt to remove the strip structure from the flange causes each rolling second projection (6) to tend to roll into greater interference with the flange, thereby increasing resistance to the removal from the flange; and that
side wall region (4) is provided with a pair of cooperating limbs (30,31) each of which projects from the free end region or an intermediate region of the one side wall (4) into the channel (5) towards the base (2) of the channel, a first limb (30) projecting from the side wall at a position closer to the free end of the wall than the other limb (31) and having an outer surface (32) intended to engage, in use, the surface of a flange received in the channel, and the other limb (31) having a length and angle of projection from the side wall intended in use to brace the said first limb (30).

## Description

This invention relates to a strip structure and, in particular, to a strip structure intended to be attached to a flange, for example a flange on a motor vehicle such as an automobile. Such strip structures are known as flange finishers and they may optionally be provided with a projecting sealing part intended to abut another component and to form a seal therewith.

Strip structures in the form of flange finishers are well known and normally they have a generally U-shaped body having a base region and two opposing side wall regions to form a channel, usually with a reinforcing member embedded in the U-shaped body.

It is normally desirable for the flange finisher to be able to be forced onto a flange reasonably easily, for example by hand or by a robot, and for it to be considerably more difficult to remove the flange finisher from the flange; this is to facilitate the fitting of the flange finisher to, for example, motor vehicles on an assembly line and yet to minimise the risk of accidental in-service displacement of the flange finisher from the flange.

With a view to increasing the resistance to removal of a flange finisher from a flange, whilst still permitting the flange finisher to be fitted to a flange without undue force, it is known to provide the opposing side wall regions of the body with projections which project into the channel between the side wall regions and which are inclined away from the open end of the channel and towards the base region of the channel. This disposition of the projections facilitates the fitting of the flange finisher to a flange and yet enhances the resistance to removal of the flange finisher from the flange. The projections employed to date for this purpose generally have a cross-section, as taken at right angles to the longitudinal direction of the strip structure, which tapers towards the free end of the projections, although some projections, again as seen in cross-section, are approximately parallel-sided on those surfaces leading to the free end.

GB-A-2172640 discloses a channel-shaped sealing strip which has an increased resistance to removal from a flange to which it is fitted. In this arrangement, one of the side walls of the strip structure is provided with a rolling projection having a free head region and a neck region at the junction with the side wall, the head region being enlarged relative to the neck region and the head region having an arcuate surface in that portion intended to abut, in use, a flange accommodated in the channel.

The present invention provides new arrangements which are relatively easy to fit onto a flange, for example by hand, and yet relatively difficult to remove from the flange. The arrangements described herein are also able to accommodate a wider than usual range of flange thicknesses.

According to a first aspect of the present invention, there is provided a strip structure intended for attachment to a flange, which strip structure comprises a generally U-shaped body optionally reinforced by a rigid or flexible reinforcing member, the body having a base region and two opposed side wall regions, which between them define a channel intended for accommodating a flange, one ("the first") side wall region being provided with at least one first projection which projects into the channel and the other ("the second") side wall region being provided with at least one second projection which is a rolling projection, characterized in that:
the rolling projection has, as seen in cross-section through the strip structure, a free head region which is connected to the said second side wall region by an extended stem, there being a constricted neck region located between the stem and the head region, the head region and the stem each being enlarged relative to the neck region and the head region having an arcuate surface in that portion intended to abut the flange when the latter is accommodated in the channel, the arrangement being such that, when a flange is accommodated in the channel with the first and second projections abutting the flange, an attempt to remove the strip structure from the flange causes each rolling second projection to tend to roll into greater interference with the flange, thereby increasing resistance to the removal from the flange; and also characterized in that:
the one ("the first") side wall region is provided with a pair of cooperating limbs each of which projects from the free end region or an intermediate region of the one side wall into the channel towards the base of the channel, a first limb of the said pair of limbs projecting from the side wall at a position closer to the free end of the wall than the other limb and having an outer surface intended to engage, in use, the surface of a flange received in the channel, and the other (second) limb of the pair of limbs having a length and angle of projection from the side wall intended in use to brace the said first limb.

Each such rolling projection, which can be thought of as a double-jointed rolling key, has an increased range of operation. Also, the shape of the stem enables the rolling key to act more rapidly and more strongly.

Preferably, the said second side wall is provided with two or three of said rolling projections, which may extend generally parallel to each other. In presently preferred embodiments, there are two of said rolling projections.

The neck part of the rolling projection may be located approximately at the middle third of the projection as measured from the tip of the head to the base of the stem. The neck region may be a relative thinning of the material from which the projection is formed. For example, the neck region may have a thickness which is between about one third and two thirds, typically about one half, of the thickness of the maximum thickness of the head region. The neck should also have a width (that is to say along the direction of the projection from its base to tip) which is sufficient to allow the head portion to hinge in both directions relative to the stem, and thereby allow the arcuate portion of the head to roll against a flange accommodated in the channel.

The stem portion is connected at one end to the head region via the neck. At its other end or as will be referred to herein, its base, the stem is connected to the said second of the side walls. In the region of connection of the base of the stem to the side wall, the stem may be thinned relative to the remainder of the stem portion in order to permit the stem to flex more easily about the side wall. In one embodiment, the stem may taper towards its base in order to create such thinning.

The first limb of the pair of limbs may project from the free end of the first side wall and its outer wall may be generally convex over a first part of the limb which extends from the side wall towards the middle region of the limb and generally straight over a second part thereof towards its free end. As a result, the said first limb may extend out into the channel to a considerable degree, for example such that, when the strip structure is in the relaxed (unfitted) state, its free end portion lies in a plane generally parallel to the side walls, substantially mid-way between the side walls of the channel.

The inside of the free end region of the said first limb (i.e. the side of the limb facing the side wall from which it projects) may be provided with a recess capable of receiving the free end of the second, bracing limb.

The middle region of the inside surface of the first limb of the pair of limbs may be provided with a sequence of grooves, which may be V shaped. These may enhance the flexibility of the said first limb of the pair of limbs.

The said second of the pair of limbs is intended in use to brace the first limb of the pair of limbs to make removal of a flange received in the channel more difficult.

The strip structure of this aspect of the present invention allows flanges of differing thickness to be accommodated and held securely.

According to a second aspect of the present invention, there is provided a strip structure intended for attachment to a flange, which strip structure comprises a generally U-shaped body optionally reinforced by a reinforcing member, the body having a base region and two opposed side wall regions, which between them define a channel intended for accommodating a flange, at least one of the side wall regions being provided with at least one projection which projects into the channel, wherein the base of the strip structure on the inside of the channel is provided with an arch structure comprising a flexible convex wall which extends along the length of the elongate structure.

The arch structure may extend from the corner region between the base and one side wall to the corner region between the base and the other side wall and define a hollow between it and the base of the channel.

The surface of the arch structure which faces the inside of the channel may be provided with a series of ridges and grooves which can engage the sharp edges of the flange in a positive manner, thereby stabilising the strip structure relative to the flange.

In this embodiment, when a flange is received in the channel its end abuts the arch and deforms it towards the base. Either side of the abutment, the wall of the arch bulges and tends to surround the end of the flange, so having a desirable stabilising effect on the flange received in the channel.

In the strip structure of this second aspect of the present invention, the projection or projections projecting from the or each side wall may be conventional in nature, or may be projections as described above in relation to the first aspect of the present invention. In use, these contact the flange received in the channel. In preferred embodiments, these projections are inclined towards the base of the channel.

The different aspects of the invention may be combined. Thus, the strip structure of the first aspect of the present invention may additionally include an arched base in accordance with the second aspect of the present invention.

The optional reinforcing member of the sealing strip of the various aspects of this invention can be one which is well known per se. It is presently preferred to make use of a metal, for example, a steel core, which may or may not be perforated in a manner known per se. The core is embedded in an elastomeric material such as a synthetic polymeric material, or a rubber e.g. E.P.D.M. or P.V.C. In some embodiments, the reinforcing member may be a relatively rigid polymer material, in which case the channel structure would has a so-called dual durometer arrangement.

The various limbs in the structures of the different aspects of this invention are normally polymeric in nature and typically will be formed of the same polymeric material as the covering on the core. In some embodiments, however, the limbs may be made of a different polymer to that of the base and walls of the channel.

In all aspects of the present invention, the side walls of the U shaped channel may be parallel to each other, tapered inwardly to the open end or so-called "barrel" shaped, that is to say bowing outwardly towards the middle of each side wall.

In a manner which is known per se, sealing lips or other structures may be attached to the strip structure of the various aspects of the present invention to perform a sealing or other function in a vehicle body, such as to provide a seal around the door aperture of an automobile. The strip structure may be decorated for aesthetic purposes or may be covered with a flock or other slip coating to reduce resistance against an abutting part. The sealing strip may be made by a conventional extrusion process.

For a better understanding of the present invention and to show how it may be put into effect, reference will now be made, by way of example, to the accompanying drawings, in which:
Figure 1 is a cross-section through an embodiment of a strip structure in accordance with the present invention;
Figure 2 shows the same strip as in Figure 1, but with a relatively narrow flange received in the channel;
Figure 3 shows the same strip as in Figure 1, but with a relatively thick flange received in the channel;
Figure 4 shows a second embodiment of a strip structure in accordance with the present invention, fitted to a flange;
Figure 5 shows a third embodiment of a strip structure in accordance with the present invention, fitted to a flange; and
Figure 6 shows a fourth embodiment of a strip structure in accordance with the present invention, fitted to a flange.

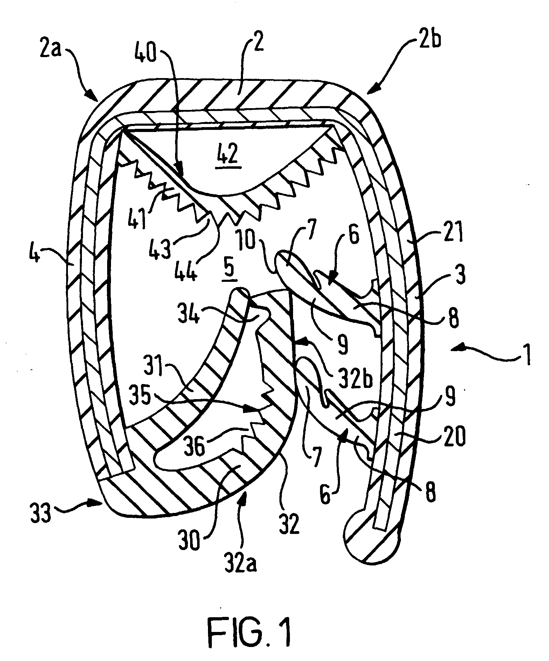

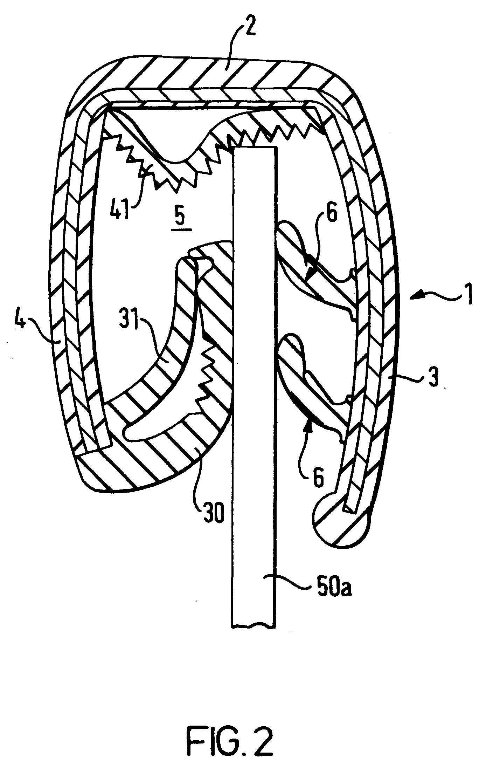

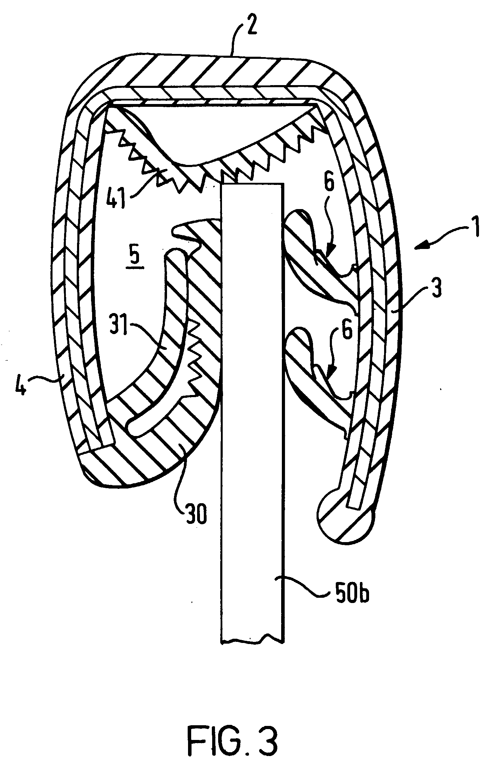

Figure 1 illustrates a strip structure in accordance with the present invention in its "finally sized" form, that is in a relaxed state, prior to fitment to a flange (see Figures 2 and 3). Figure 1 is a cross-section. The strip structure shown is extruded as a length having a constant cross-section. The strip structure comprises a generally U-shaped body 1 reinforced by a steel reinforcing member 20. The body 1 has a base region 2 and first and second opposed side wall regions 3 and 4, which between them define a channel 5 intended for accommodating a flange (not shown) . The reinforcing member 20 extends along substantially the whole length of the walls 3, 4 and base 2 and as shown is embedded within an elastomeric coating or covering 21. For example, a typical coating will be a polymer having a Shore hardness of 70.

Side wall region 3 is provided with two first rolling projections 6 which project into the channel 5. Each rolling projection 6 has, as seen in cross-section through the strip structure, a free head region 7 which is connected to the side wall 3 by an extended stem 8, there being a constricted neck region 9 located between the stem 8 and the head region 7, the head region 7 and the stem 8 each being enlarged relative to the neck region 9 and the head region 7 having an arcuate surface 10 in that portion intended to abut the flange when the latter is accommodated in the channel 5. These arcuate surfaces may be involute or of a nature which is similar to involute.

The neck part 9 of the rolling projection 6 is located approximately at the midpoint of the projection as measured from the tip of the head 7 to the base of the stem 8. The neck region 9 is constituted by a relative thinning of the material from which the projection 6 is formed. The neck 9 has a width (in the direction of the projection 6 from its base to tip) which is sufficient to allow the head portion to hinge in both directions relative to the stem 8, and thereby allow the arcuate portion 10 of the head 7 to roll against a flange accommodated in the channel 5.

The stem portion 8 is connected at one end to the head region 7 via the neck 9. At its base, the stem 8 is connected to the side wall 3. In the region of connection of the base of the stem 8 to the side wall 3, the stem is thinned relative to the remainder of the stem portion 8 in order to permit the stem 8 to flex more easily about the side wall 3.

Projecting from the free end region of the other side wall 4 towards the base 2 of the channel 5 is a pair of cooperating limbs 30, 31. First limb 30 of the pair of limbs projects from the side wall 3 at a position closer to the free end of the wall 3 than the second limb 31. First limb 30 has an outer surface 32 intended to engage, in use, the surface of a flange received in the channel 5, and the second limb of the pair of limbs has a length and angle of projection from the side wall 3 to brace the first limb 30.

The first limb 30 of the pair of limbs projects from the free end 33 of the second side wall 4 and its outer surface 32 is generally convex over a first part 32a of the limb which extends from the side wall 4 towards the middle region of the limb 30 and generally straight over a second part 32b thereof towards its free end. The first limb 30 extends into the channel 5 so that when the strip structure is in the relaxed (unfitted) state as shown in Figure 1, its free end portion 32b lies in a plane generally parallel to the side walls 3, 4, substantially mid-way between the side walls 3, 4 of the channel 5.

The inside of the free end region of the said first limb 30 is provided with a recess 34 capable of receiving the free end of the second, bracing limb 31.

The middle region of the inside surface 35 of the first limb 30 is provided with a sequence of V-shaped grooves 36. These locally enhance the flexibility of the first limb 30.

The second limb 31 braces the first limb 30 in use to make removal of a flange received in the channel 5 more difficult.

The base 2 of the strip structure is provided with an arch structure 40 comprising a flexible convex wall 41. The arch structure extends from the corner region 2a between the base 2 and side wall 4 to the corner region 2b between the base 2 and the other side wall 3 and defines a hollow 42 between it and the base 2 of the channel 5. The surface of the arch structure 40 which faces the inside of the channel 5 may be provided with a series of ridges 44 and grooves 43.

The strip structure of Figure 1 may be dimensioned according to the intended application of the structure. For example, as a typical flange finisher for use on a motor vehicle, the strip structure may have a height (as viewed in Figure 1) of about 18mm and an overall width of about 13mm.

Figures 2 and 3 illustrate the strip structure of Figure 1 with a flange 50a (Figure 2) or 50b (Figure 3) received in the channel 5. As seen in these figures, when the flange is received in the channel it causes the projections 6 to deform and roll inward towards the wall 3. In addition, the limb 30 is flexed towards wall 4 and in turn also biases limb 31 towards wall 4, so that the limbs 30 and 31 abut each other. When an attempt is made to remove the flange 50a/50b from the channel 5, the rolling projections will roll anti-clockwise and into greater engagement with the flange 50, so increasing the force required to remove it from the channel 5. Similarly, the braced structure comprising limbs 30 and 31 has a compound effect comparable with a single limb having a much greater thickness.

Furthermore, when the flange 50 is received in the channel 5 its end abuts the arch 40 and deforms it towards the base 2. Either side of the abutment position, the wall 41 of the arch 40 bulges and tends to surround the end of the flange 50, so having a desirable stabilising effect on the flange received in the channel 5.

The strip structure of the invention is able to accommodate a wide range of panel/flange thicknesses, for example 0.7 to 6.0mm by simple hand fitting, but which require a significantly higher force to remove from the flange. For example, using 100mm painted test plates 1.7 and 2.5mm thick, the push-on, pull-off ratios are typically 7:1 and 10:1. One particular advantage of the strip structure of the invention is that it is able to accommodate this wide range of flange thicknesses with barely discernable alteration to the outer profile, thus aiding cosmetic smoothness.

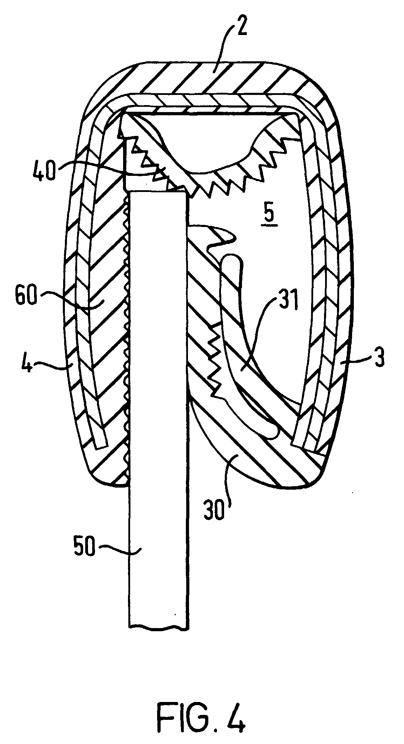

Figure 4 shows an alternative embodiment in which components comparable to those shown in Figures 1, 2 and 3 are identified by the same reference numerals. Opposite the pair of limbs 30, 31 is an internal wall region 60, of enhanced thickness, on the inside of the side wall 4. In the "rest" position, the limbs 30, 31 project more into the channel than their counterparts in Figure 1. Figure 4 is thus an embodiment in accordance with the second aspect of the present invention.

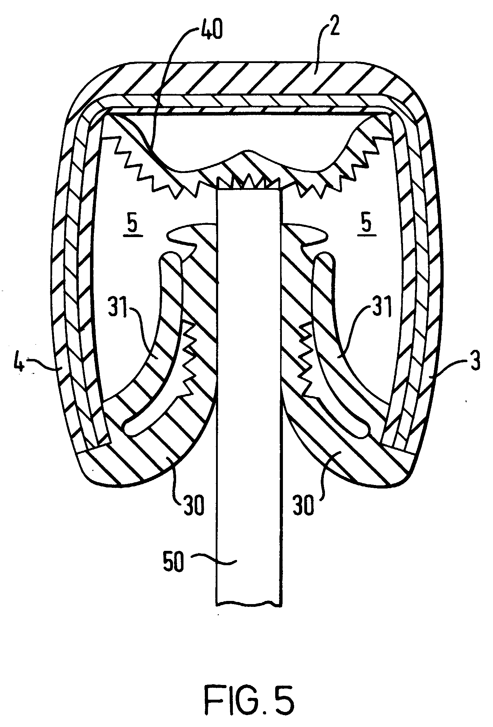

Figure 5 shows a variant in which each side wall 3, 4 is provided with the pair 30, 31 of limbs, with the limbs 30 gripping opposing faces of a flange 50. Thus, the variant of Figure 5 is in accordance with the second aspect of the present invention, but with each of the first and second side wall regions 3, 4 of the body being provided with the pair of cooperating limbs.

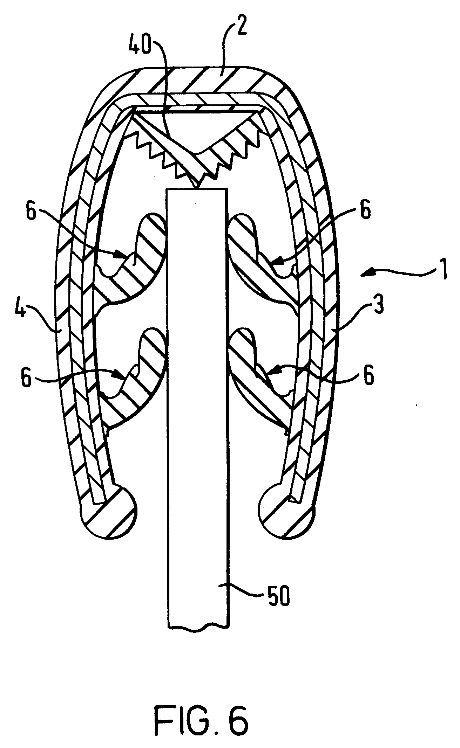

Figure 6 shows a further variant in which each of the side wall regions 3,4 of the body 1 is provided with two of the rolling projections 6 as defined in the first aspect of the present invention.

## Claims

1. A strip structure intended for attachment to a flange, which strip structure comprises a generally U-shaped body optionally reinforced by a rigid or flexible reinforcing member, the body having a base region and two opposed side wall regions, which between them define a channel intended for accommodating a flange, one ("the first") side wall region being provided with at least one first projection which projects into the channel and the other ("the second") side wall region being provided with at least one second projection which is a rolling projection, characterized in that:
the rolling projection has, as seen in cross-section through the strip structure, a free head region which is connected to the said second side wall region by an extended stem, there being a constricted neck region located between the stem and the head region, the head region and the stem each being enlarged relative to the neck region and the head region having an arcuate surface in that portion intended to abut the flange when the latter is accommodated in the channel, the arrangement being such that, when a flange is accommodated in the channel with the first and second projections abutting the flange, an attempt to remove the strip structure from the flange causes each rolling second projection to tend to roll into greater interference with the flange, thereby increasing resistance to the removal from the flange; and also characterized in that:
the one ("the first") side wall region is provided with a pair of cooperating limbs each of which projects from the free end region or an intermediate region of the one side wall into the channel towards the base of the channel, a first limb of the said pair of limbs projecting from the side wall at a position closer to the free end of the wall than the other limb and having an outer surface intended to engage, in use, the surface of a flange received in the channel, and the other (second) limb of the pair of limbs having a length and angle of projection from the side wall intended in use to brace the said first limb.

2. A strip structure according to claim 1, wherein said second side wall is provided with two or three of said rolling projections, which optionally extend generally parallel to each other.

3. A strip structure according to claim 1 or 2, wherein the neck part of the rolling projection is located approximately at the middle third of the projection as measured from the tip of the head to the base of the stem, i.e. where the stem connects to said second side wall region.

4. A strip structure according to claim 1, 2 or 3, wherein the neck region is a relative thinning of the material from which the projection is formed.

5. A strip structure according to any preceding claim, wherein the stem portion is connected at one end to the head region via the neck, and at its other end, i.e. its base, the stem is connected to the said second of the side walls; and wherein in the region of connection of the base of the stem to the side wall, the stem is thinned relative to the remainder of the stem portion in order to permit the stem to flex more easily about the side wall.

6. A strip structure according to claim 5, wherein the stem tapers towards its base in order to create such thinning.

7. A strip structure according to any preceding claim, wherein the first limb of the pair of limbs projects from the free end of the first side wall and its outer wall is generally convex over a first part of the limb which extends from the side wall towards the middle region of the limb and generally straight over a second part thereof towards its free end.

8. A strip structure according to any preceding claim, wherein the inside of the free end region of the said first limb (i.e. the side of the limb facing the side wall from which it projects) is provided with a recess capable of receiving the free end of the second, bracing limb.

9. A strip structure according to any preceding claim, wherein the middle region of the inside surface of the first limb of the pair of limbs is provided with a sequence of grooves, for enhancing the flexibility of the said first limb of the pair of limbs.

10. A strip structure intended for attachment to a flange, which strip structure comprises a generally U-shaped body optionally reinforced by a reinforcing member, the body having a base region and two opposed side wall regions, which between them define a channel intended for accommodating a flange, at least one of the side wall regions being provided with at least one projection which projects into the channel, wherein the base of the strip structure on the inside of the channel is provided with an arch structure comprising a flexible convex wall which extends along the length of the elongate structure.

11. A strip structure according to claim 10, wherein the arch structure extends from the corner region between the base and one side wall to the corner region between the base and the other side wall and defines a hollow between it and the base of the channel.

12. A strip structure according to claim 10 or 11, wherein the surface of the arch structure which faces the inside of the channel may be provided with a series of ridges and grooves which in use can engage the sharp edges of the flange in a positive manner, thereby stabilising the strip structure relative to the flange.

13. A strip structure according to any one of claims 10 to 12, which also has the characteristics defined in any one of claims 1 to 9.

14. A strip structure according to any preceding claim, wherein each of the first and second side wall regions of the body has at least one said rolling projection.

15. A strip structure according to any preceding claim, wherein each of the first and second side wall regions of the body is provided with a said pair of cooperating limbs.
